# EUROPÄISCHE PATENTSCHRIFT

(11) **EP 3 733 318 B1**
(45) Veröffentlichungstag und Bekanntmachung des Hinweises auf die Patenterteilung: **03.01.2024**
(21) Anmeldenummer: 19171867.5
(22) Anmeldetag: 30.04.2019
(51) Int. Cl.: B21C 23/14, B21C 29/00, B21C 35/02, B62D 33/04

(54) **VERFAHREN ZUR HERSTELLUNG EINES UMGEFORMTEN STRANGPRESSPROFILS UND NUTZFAHRZEUGAUFBAU MIT EINEM SOLCHEN STRANGPRESSPROFIL**
METHOD FOR PRODUCING A FORMED EXTRUDED PROFILE AND COMMERCIAL VEHICLE STRUCTURE WITH SUCH A PROFILE
PROCÉDÉ DE FABRICATION D'UN PROFILÉ EXTRUDÉ FORMÉ ET STRUCTURE DE VÉHICULE UTILITAIRE DOTÉE D'UN TEL PROFILÉ

(43) Veröffentlichungstag der Anmeldung: 04.11.2020
(73) Patentinhaber: Schmitz Cargobull AG, 48341 Altenberge (DE)
(72) Erfinder: Dahlhaus, Andreas, 48712 Gescher (DE)
(74) Vertreter: Cohausz & Florack

(56) Entgegenhaltungen:
- EP-A1- 2 527 057
- WO-A1-2019/056089
- CH-A5- 621 848
- DE-A1-102015 118 099
- GB-A- 1 542 811
- GB-A- 2 036 659
- US-A1- 2003 019 105

## Beschreibung

Die Erfindung betrifft ein Verfahren zur Herstellung eines umgeformten Strangpressprofils, bei dem ein metallischer Werkstoff auf eine Presstemperatur erwärmt und anschließend zur Bildung eines Strangpressprofils durch eine Matrize gepresst wird. Ferner betrifft die Erfindung einen Nutzfahrzeugaufbau, insbesondere Kofferaufbau, vorzugsweise eines Lastkraftwagens, Anhängers oder Sattelaufliegers.

Strangpressprofile sind aus unterschiedlichen Anwendungen, beispielsweise aus dem Nutzfahrzeugbau, bekannt. Die Strangpressprofile bieten im Vergleich zu anderen Profilen oftmals den Vorteil der Gewichtsersparnis, da die Strangpressprofile regelmäßig aus Leichtmetallen gefertigt werden. Zudem bietet die Fertigung der Strangpressprofile die einfache Möglichkeit, Profile auch mit recht komplexen Querschnittsgeometrien bereitzustellen. Aufgrund dieser Eigenschaften werden Strangpressprofile an verschiedenen Stellen in Nutzfahrzeugaufbauten, insbesondere in Kofferaufbauten von Lastkraftwagen, Anhängern oder Sattelaufliegern eingesetzt.

Die Nutzfahrzeuge sind grundsätzlich für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Dachs des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Auch die Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach und die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport, geeignet.

Im Falle eines Kühltransports weisen die Nutzfahrzeuge regelmäßig Transportkältemaschinen auf, die typischerweise an der Stirnwand des Nutzfahrzeugaufbaus angebracht sind. Die Transportkältemaschinen saugen regelmäßig Luft aus dem Laderaum des Nutzfahrzeugs an und blasen die Luft gekühlt wieder in den Laderaum zurück. Um den Laderaum dabei in Abschnitte unterschiedlicher Temperaturniveaus zu unterteilen, sind sogenannte Trennwände bekannt, die beispielsweise in einer Nichtgebrauchsstellung in der Längsrichtung des Nutzfahrzeugaufbaus verfahren und sodann in die Gebrauchsstellung geschwenkt werden können, in der die Trennwände einen vorderen und einen hinteren Abschnitt des Laderaums voneinander trennen.

Strangpressprofile erfordern grundsätzlich einen relativ hohen fertigungstechnischen Aufwand. Dies gilt insbesondere, wenn eine Nachbearbeitung des Strangpressprofils erforderlich ist, etwa weil in Längsrichtung des Strangpressprofils unterschiedliche Querschnitte gefordert werden, die sich durch das reine Strangpressen nicht realisieren lassen. Zudem weisen die Strangpressprofile relativ geringe Festigkeiten auf, was die Einsatzmöglichkeiten der Strangpressprofile verringert oder eine aufwendigere, meist massivere Ausbildung des Querschnitts der Strangpressprofile erfordert.

Verfahren zum Herstellen von umgeformten Strangpressprofilen sind beispielsweise aus der DE 10 2015 118 099 A1, der CH 621 848 A5, der EP 2 527 057 A1 und US 2003/019105 A1 bekannt. Nutzfahrzeuge mit Strangpressprofilen sind beispielsweise in der GB 1 542 811 A und der GB 2 036 659 A beschrieben.

Der vorliegenden Erfindung liegt daher die Aufgabe zugrunde, das Verfahren und den Nutzfahrzeugaufbau jeweils der eingangs genannten und zuvor näher beschriebenen Art derart auszugestalten und weiterzubilden, dass die Fertigung vereinfacht werden kann, ohne dass Einbußen hinsichtlich der Festigkeit der Strangpressprofile in Kauf genommen werden müssen.

Diese Aufgabe ist gemäß Anspruch 1 gelöst durch ein Verfahren zum Herstellen eines umgeformten Strangpressprofils,
- bei dem ein metallischer Werkstoff auf eine Presstemperatur erwärmt und anschließend zur Bildung eines Strangpressprofils durch eine Matrize gepresst wird,
- bei dem das Strangpressprofil auf eine Temperatur von weniger als 50 °C abgekühlt wird,
- bei dem das Strangpressprofil weniger als 7 Tage nach dem Abkühlen wenigstens abschnittsweise umgeformt wird in dem eine sich geradlinig in Längsrichtung des Strangpressprofils erstreckende Rippenstruktur wenigstens teilweise durch wechselseitiges Biegen zu einer sich wellenförmig in Längsrichtung des Strangpressprofils erstreckenden Rippenstruktur umgeformt wird.

Die genannte Aufgabe ist ferner gemäß Anspruch 6 gelöst durch einen Nutzfahrzeugaufbau, insbesondere Kofferaufbau, vorzugsweise eines Lastkraftwagens, Anhängers oder Sattelaufliegers, mit einem umgeformten Strangpressprofil hergestellt mittels des Verfahrens nach einem der Ansprüche 1 bis 5, wobei das Strangpressprofil (13) eine sich wellenförmig in Längsrichtung des Strangpressprofils (13) erstreckende Rippenstruktur (31) aufweist und, vorzugsweise, dass die Rippenstruktur (31) wenigstens im Wesentlichen in einer Erstreckung senkrecht zum Strangpressprofil (13) in einer sich, wenigstens im Wesentlichen in Längsrichtung des Strangpressprofils (13) erstreckenden, Nut (18) des Strangpressprofils (13) vorgesehen ist.

Die Erfindung schlägt vorliegend eine Umformung eines Strangpressprofils nach dem Strangpressen und nach einem Abkühlen des Strangpressprofils vor. Gleichzeitig wird jedoch die Zeitspanne nach dem Abkühlen des Strangpressprofils, in der das Umformen erfolgen soll, begrenzt. Trotz dieser zeitlichen Beschränkung ist es nicht vorgesehen, dass das Strangpressprofil direkt nach dem Strangpressen umgeformt wird, obwohl das Strangpressprofil dann noch warm und leicht umzuformen wäre. Dies käme zwar einer Vereinfachung der Herstellung gleich, würde aber zu Nachteilen in Bezug auf die Festigkeit des umgeformten Strangpressprofils führen. Aus diesen Gründen erfolgt in vielen Fällen eine nachträgliche, spanende Bearbeitung von Strangpressprofilen wenn diese völlig ausgekühlt sind. Die Erfindung hat nun erkannt, dass sich die Strangpressprofile auch noch einfach umformen lassen, wenn die Strangpressprofile bereits abgekühlt sind, sofern zwischen dem Abkühlen und dem Umformen nicht zu viel Zeit verstrichen ist. Dies hat zudem den Vorteil, dass auf diese Weise umgeformte Strangpressprofile sehr gute Festigkeitseigenschaften aufweisen, ohne dass dies durch einen erhöhten Materialeinsatz erkauft werden müsste, was zu einer weiteren Kostensenkung beiträgt.

Aufgrund dessen können diese umgeformten Strangpressprofile sehr vorteilhaft in Nutzfahrzeugaufbauten eingesetzt werden, und zwar insbesondere in Kofferaufbauten beispielsweise eines Lastkraftwagens, Anhängers oder Sattelaufliegers. An solche, in Nutzfahrzeugaufbauten eingesetzte Strangpressprofile werden regelmäßig hohe Anforderungen an die Wirtschaftlichkeit, das Gewicht und die Festigkeit gestellt. Daher kommen die Vorteile der entsprechenden Strangpressprofile bei Nutzfahrzeugen in besonderem Maße zum Tragen, nämlich bei geringem Materialeinsatz kostengünstig und einfach ein umgeformtes Strangpressprofil mit einer hohen Festigkeit bereitstellen zu können.

Der besseren Verständlichkeit halber und zur Vermeidung unnötiger Wiederholungen werden nachfolgend das Verfahren und der Nutzfahrzeugaufbau gemeinsam beschrieben, ohne jeweils im Einzelnen zwischen dem Verfahren und dem Nutzfahrzeugaufbau zu unterscheiden. Für den Fachmann ergibt sich jedoch anhand des Kontextes welche Merkmale jeweils in Bezug auf das Verfahren und den Nutzfahrzeugaufbau besonders bevorzugt sind.

Bei einer ersten besonders bevorzugten Ausgestaltung des Verfahrens ist vorgesehen, dass das Strangpressprofil durch ein rotierendes Biege- und/oder Presswerkzeug umgebogen wird. Dies erlaubt eine sehr präzise und reproduzierbare Fertigung der umgeformten Strangpressprofile. Eine weitere Vereinfachung des Verfahrens wird dabei möglich, wenn das rotierende Biege- und/oder Presswerkzeug in Längsrichtung des Strangpressprofils relativ zum Strangpressprofil entlang des Strangpressprofils bewegt wird. Dabei kann beispielsweise das Strangpressprofil durch das Biege- und/oder Presswerkzeug gezogen bzw. geschoben werden. In besonders einfacher Weise führt das rotierende Werkzeug nicht nur zu einem Biegen und/oder Verpressen wenigstens von Teilen des Strangpressprofils, sondern auch für den Transport des Strangpressprofils entlang des rotierenden Werkzeugs. Das Werkzeug kann dabei ganz grundsätzlich vorzugsweise ein Teil des Strangpressprofils umbiegen. Es kann aber alternativ oder zusätzlich auch ein Umformen durch ein gezieltes Verpressen von bestimmten Abschnitten des Strangpressprofils, insbesondere gegen entsprechende Matrizen, hervorgerufen werden.

Erfindungsgemäß ist es für das Umformen des Strangpressprofils, dass das Strangpressprofil wenigstens teilweise zu einer sich wellenförmig in Längsrichtung des Strangpressprofils erstreckenden Rippenstruktur umgeformt wird. Dabei entstehen zudem für die Anwendung des Strangpressprofils zweckmäßige Strukturen. Dies gilt umso mehr, da eine sich zunächst geradlinig in Längsrichtung des Strangpressprofils erstreckende Rippenstruktur des Strangpressprofils zu einer sich wellenförmig in Längsrichtung des Strangpressprofils erstreckenden Rippenstruktur umgeformt wird. Dies lässt sich einfach, schnell und sehr reproduzierbar bewerkstelligen. Erfindungsgemäß, für eine einfache und reproduzierbare Fertigung und/oder für ein zweckmäßiges Strangpressprofil wird das Strangpressprofil in Form der zunächst geradlinig verlaufende Rippenstruktur wenigstens teilweise durch wechselseitiges Biegen zur sich wellenförmig in Längsrichtung des Strangpressprofils erstreckenden Rippenstruktur umgeformt.

Die mechanischen Eigenschaften des umgeformten Strangpressprofils, insbesondere dessen Festigkeit, kann positiv beeinflusst werden, wenn das Strangpressprofil vor dem Umformen auf eine Temperatur von weniger als 40 °C, vorzugsweise von weniger als 30 °C, abgekühlt wird. Alternativ oder zusätzlich ist es zur Vereinfachung des Umformens sowie zur Verbesserung der mechanischen Eigenschaften des umgeformten Strangpressprofils, insbesondere von dessen Festigkeit, zweckmäßig, wenn das Strangpressprofil weniger als 5 Tage, vorzugsweise weniger als 3 Tage, insbesondere weniger als 1 Tag, nach dem Abkühlen wenigstens abschnittsweise umgeformt wird.

Aufgrund der mechanischen Eigenschaften und der Verarbeitbarkeit bei gleichzeitig moderaten Kosten bietet es sich grundsätzlich an, wenn der metallische Werkstoff Aluminium oder eine Aluminiumlegierung ist. Aus denselben Gründen kann der metallische Werkstoff alternativ oder zusätzlich vor dem Strangpressen auf eine Temperatur oberhalb der Rekristallisationstemperatur des metallischen Werkstoffs erwärmt werden. Bei Aluminium beträgt diese Temperatur etwa 300 °C und kann je nach Legierung etwas höher oder niedriger sein. Das Strangpressen ist dabei grundsätzlich besonders einfach durchzuführen, wenn der metallische Werkstoff vor dem Strangpressen auf eine Temperatur von über 300 °C, insbesondere auf eine Temperatur zwischen 400 °C und 500 °C, erwärmt wird.

Die Vorteile des umgeformten Strangpressprofils kommen in besonderem Maße zum Tragen, wenn das umgeformte Strangpressprofil ein Profil eines Nutzfahrzeugaufbaus, vorzugsweise Kofferaufbaus, ist. Dabei wirken sich insbesondere die Festigkeitseigenschaften positiv aus, wenn das umgeformte Strangpressprofil ein Trennwandlaufprofil, ein Doppelstockprofil oder ein, bedarfsweise Öffnungen zum Einhaken von Ladungssicherungsmitteln aufweisendes, Ladungssicherungsprofil ist. Unter einem Trennwandlaufprofil wird dabei ein Profil verstanden, an dem in einer Nichtgebrauchsstellung eine Trennwand zum Unterteilen des Laderaums des Nutzfahrzeugs, insbesondere quer zur Längserstreckung des Laderaums oder Nutzfahrzeugs, aufgehängt ist. Entlang des Trennwandlaufprofils kann die Trennwand dann im Laderaum verschoben werden, solange sich die Trennwand in der Nichtgebrauchsstellung befindet. Dazu ist die Trennwand vorzugsweise mittels eines Schlittens in einer korrespondierenden Aufnahme des Trennwandlaufprofils verschiebbar aufgehängt. Unter einem Doppelstockprofil wird dagegen ein in einer Seitenwand des Nutzfahrzeugaufbaus vorgesehenes Profil verstanden, in dem, vorzugsweise auf unterschiedlichen Höhen ein Doppelstockbalken quer zur Längserstreckung des Laderaums aufgenommen werden kann. Auf den sich dann quer zum Laderaum ersteckenden Doppelstockbalken kann dann Ladung, etwa auf Paletten abgestellt werden, um den Laderaum auf unterschiedlichen Höhenniveaus beladen zu können. Unter einem Ladungssicherungsprofil wird dagegen ein Profil verstanden, an dem oder in dem Ladungssicherungsmittel, wie beispielsweise Spanngurte oder Ladungssicherungsbalken festgelegt werden können.

Bei einer ersten besonders bevorzugten Ausgestaltung des Nutzfahrzeugaufbaus ist vorgesehen, dass das umgeformte Strangpressprofil ein Trennwandlaufprofil, ein Doppelstockprofil oder ein, bedarfsweise Öffnungen zum Einhaken von Ladungssicherungsmitteln aufweisendes, Ladungssicherungsprofil ist. Die damit einhergehenden Vorteile wurden zuvor bereits dargelegt. Es ist aber auch denkbar, dass das umgeformte Profil eine Zahnstange, beispielsweise eines elektrischen Rolltors, oder eine Arretierungseinrichtung für eine Fallsicherung eines mechanischen Rolltors ist. Bei einer Verwendung des umgeformten Profils als Zahnstange kann mit dem Profil in dessen Längsrichtung gesehen wenigstens ein Antriebsrad eines, insbesondere elektrischen Antriebs, in Eingriff stehen, so dass wenigstens das Antriebsrad, insbesondere der Antrieb oder ein Antriebsschlitten, entlang des Profils hin und her verfahren werden kann, je nachdem in welche Richtung das wenigstens einen Antriebsrad angetrieben wird. Bei der Verwendung des umgeformten Profils als Fallsicherung eines Rolltors kann eine Sicherung formschlüssig in das umgeformte Profil eingreifen, so dass das Rolltor nicht unkontrolliert nach unten fällt, etwa wenn ein Halteseil oder eine Kette reißt, die das Rolltor bei ungestörtem Gebrauch hält. Die Sicherung kann dabei federbelastet sein, so dass ein zwangsweises, formschlüssiges Eingreifen der Sicherung in das umgeformte Profil sichergestellt wird, sobald ein kritischer Betriebszustand wie ein Riss eines Halteseils eintritt. In den beiden letztgenannten Anwendungen kommt es auf eine hohe Zuverlässigkeit bei erhöhten Krafteinwirkungen an. Diesen Anforderungen kann das umgeformte Strangpressprofil in hohem Maße gerecht werden.

Aus funktionaler Sicht und erfindungsgemäß weist das Strangpressprofil, zum Bereitstellen eines Formschlusses oder einer Rastverbindung, eine sich wellenförmig in Längsrichtung des Strangpressprofils erstreckende Rippenstruktur auf. Diese Rippenstruktur kann wenigstens im Wesentlichen in einer Erstreckung senkrecht zum Profil in einer sich, wenigstens im Wesentlichen in Längsrichtung des Profils erstreckenden, Nut des Profils vorgesehen ist. So kann in die wellenförmige Rippenstruktur von außen eingegriffen werden. Gleichzeitig ist die wellenförmige Rippenstruktur recht gut vor unerwünschten äußeren Einwirkungen geschützt.

Um beispielsweise einen Schlitten aufnehmen zu können, über den ein Bauteil entlang des Strangpressprofils verschoben werden kann, bietet es sich an, wenn das umgeformte Strangpressprofil eine sich in Längsrichtung erstreckende Aufnahme für einen längsverschiebbaren und über wenigstens eine Rolle auf wenigstens einer Lauffläche abrollenden Schlitten aufweist. Für die Verbindung mit dem Schlitten ist es weiter bevorzugt, wenn die Aufnahme nicht völlig geschlossen ist, sondern einen Längsschlitz aufweist, der sich weiter vorzugsweise wenigstens im Wesentlichen entlang der Längserstreckung des Strangpressprofils erstreckt. Zum Abrollen des wenigstens einen Schlittens ist es zudem zweckmäßig, wenn die Aufnahme wenigstens eine sich in Längsrichtung erstreckende, innere Lauffläche für den Schlitten bzw. dessen wenigstens eine Rolle aufweist. Dabei ist es aus funktionaler Sicht, etwa zum Arretieren des Schlittens über die wellenförmige Rippenstruktur bevorzugt, wenn die Aufnahme und die Rippenstruktur wenigstens im Wesentlichen parallel zueinander verlaufen und/oder der Längsschlitz und der freie Rand der Rippenstruktur wenigstens im Wesentlichen in dieselbe Richtung weisen.

Aus funktionaler Sicht kann es ebenfalls zweckmäßig sein, wenn die Aufnahme und die Rippenstruktur in einem Anstand von höchstens 30 cm, vorzugsweise wenigstens 20 cm, insbesondere wenigstens 10 cm, zueinander angeordnet sind. Hier kann im Falle einer Arretierung eine Bauteils ein zusätzliches Verkanten desselben vermieden werden. Die Aufnahme kann dabei besonders zweckmäßig zum Führen wenigstens eines Schlittens genutzt werden, wenn die Aufnahme einen wenigstens im Wesentlichen rechteckigen, ovalen oder runden Querschnitt aufweist. Zudem kann zum Zwecke einer Kompaktheit und Materialeinsparung vorgesehen sein, dass die Aufnahme, insbesondere mit einer Außenseite, eine Nutflanke der die Rippenstruktur wenigstens im Wesentlichen aufnehmenden Nut bildet.

Ein Schutz der wellenförmigen Rippenstruktur kann auch erreicht werden, indem die Rippenstruktur in Richtung ihres freien Rands nicht gegenüber der Aufnahme und/oder dem Längsschlitz vorsteht. Hier ist insbesondere ein Vorstehen in der Richtung der Rippenstruktur hin zu dem freien Rand der Rippenstruktur gemeint.

Besonders zweckmäßig, etwa um das umgeformte Strangpressprofil in einer Wand oder in das Dach des Nutzfahrzeugaufbaus einzulassen, ist es ganz grundsätzlich, wenn seitlich angrenzend an die Nut und auf der von der Nut abgewandten Seite der Aufnahme seitlich angrenzend an die Aufnahme jeweils ein äußerer Schenkel des Strangpressprofils vorgesehen ist. Die äußeren Schenkel können dann gleichfalls den äußeren Abschluss des umgeformten Strangpressprofils bilden. Dabei ist es aus dem genannten Grund weiter bevorzugt, wenn die Schenkel auf der von der Aufnahme wegweisenden Seite wenigstens im Wesentlichen in einer gemeinsamen Ebene liegende Schenkelflächen aufweisen. Es kann zudem besonders bevorzugt sein, wenn die Außenseiten der Schenkel jeweils wenigstens im Wesentlichen insgesamt in einer gemeinsamen Ebene angeordnet sind.

Das umgeformte Strangpressprofil kann einen besonders hohen Nutzwert bereitstellen, wenn in die umgeformte Rippenstruktur des Strangpressprofils wenigstens ein Rast- und/oder Arretierelement formschlüssig eingreift. So lässt sich ein Bauteil des Nutzfahrzeugaufbaus an dem Strangpressprofil festlegen oder arretieren. Dabei kann das Rast- und/oder Arretierelement in einer Richtung senkrecht zum Strangpressprofil, insbesondere wenigstens im Wesentlichen parallel zur Rippenstruktur, mit der Rippenstruktur verrastet und/oder in einer Richtung wenigstens im Wesentlichen parallel zum Strangpressprofil und wenigstens im Wesentlichen parallel zur Rippenstruktur, insbesondere ohne Verrasten, formschlüssig mit der Rippenstruktur in Eingriff stehen. Das Verrasten kann dabei dazu dienen, ein versehentliches Trennen von Strangpressprofil und Rast- und/oder Arretierelement zu vermeiden. In Richtung des freien Rands der Rippenstruktur kann dabei beispielsweise vermieden werden, dass das Rast- und/oder Arretierelement versehentlich aus der Nut herausgezogen wird, in der die Rippenstruktur wenigstens im Wesentlichen aufgenommen ist. In einer Richtung senkrecht dazu kann ein, bedarfsweise reiner, Formschluss dazu führen, dass ein Verschieben des Rast- und/oder Arretierelements entlang des Strangpressprofils oder der Rippenstruktur verhindert wird.

Diese Vorteile kommen in besonderem Maße zum Tragen, wenn das Rast- und/oder Arretierelement ein Element einer Trennwand, eines Doppelstockbalkens oder eines Ladungssicherungsmittels ist. Das Rast- und/oder Arretierelement kann zudem aus einem Kunststoff oder Gummi hergestellt sein. Dabei ist es zweckmäßig, wenn das Rast- und/oder Arretierelement flexibel ist, aber nur unter Aufbringung höherer Verformungskräfte. Dann kann das Rast- und/oder Arretierelement das umgeformte Strangpressprofil teilweise sicher umgreifen und dann zudem hohe Haltekräfte aufnehmen.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Nutzfahrzeugaufbau in einer schematischen, perspektivischen Ansicht,
- Fig. 2A-B: einen Abschnitt eines noch nicht umgeformten Strangpressprofils in einer perspektivischen Ansicht und in einem Querschnitt,
- Fig. 3: einen Fertigungsschritt zum Umformen des Strangpressprofils aus Fig. 2 mit einem Biege- und/oder Presswerkzeug in einer Draufsicht.
- Fig. 4A-B: den Abschnitt des Strangpressprofils aus Fig. 2 nach dem Umformen desselben gemäß Fig. 3 in einer perspektivischen Ansicht und in einem Querschnitt,
- Fig. 5: ein Detail des Nutzfahrzeugaufbaus aus Fig. 1 mit einer Trennwand in einer Nichtgebrauchsstellung in einem Querschnitt,
- Fig. 6A-B: das Detail des Nutzfahrzeugaufbaus aus Fig. 1 mit einer Trennwand in einer Gebrauchsstellung in einer Ansicht von unten und in einem Querschnitt.

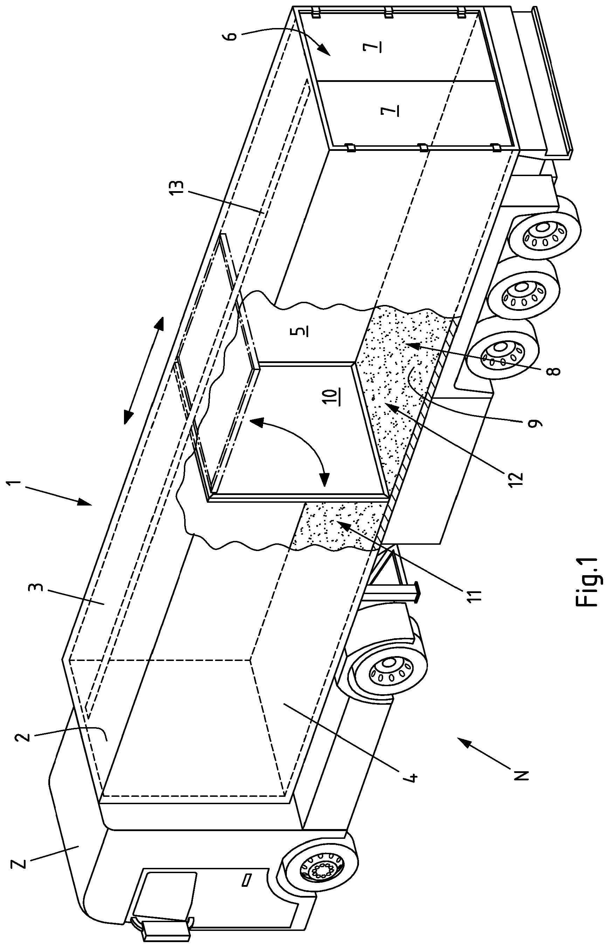

In der Fig. 1 ist ein Nutzfahrzeug N in Form eines von einer Zugmaschine Z gezogenen Nutzfahrzeugs N mit einem Nutzfahrzeugaufbau 1 in Form eines Kofferaufbaus dargestellt. Der Nutzfahrzeugaufbau 1 weist eine feste Stirnwand 2, ein festes Dach 3 und feste Seitenwände 4,5 auf. Die Rückwand 6 ist durch Flügeltüren 7 verschlossen. Die Stirnwand 2, das Dach 3 und die Seitenwände 4,5 werden durch Paneele umfassend zwei strukturgebende äußere Decklagen und eine dazwischen angeordnete Kernschicht gebildet. Die äußeren strukturgebenden Decklagen können ihrerseits mehrlagig aufgebaut sein und umfassen vorzugsweise wenigstens eine metallische Schicht oder eine Schicht aus einem faserverstärkten Kunststoff. Die Kernlage wird vorliegend aus einem geschäumten Kunststoff, insbesondere aus Polyurethan, gebildet. Der Nutzfahrzeugaufbau 1 schließt einen Laderaum 8 und einen Ladeboden 9 ein.

Der Laderaum 8 kann über eine Trennwand 10 in der Längsrichtung des Laderaums 8 bzw. in Längsrichtung des Nutzfahrzeugaufbaus 1 in zwei separate Abschnitte 11,12 unterteilt werden. Die dargestellte und insoweit bevorzugte Trennwand 10 kann in einer Nichtgebrauchsstellung (mit strichpunktierten Linien dargestellt), in der die Trennwand 10 nahe des Dachs 3 und wenigstens etwa parallel zum Dach 3 angeordnet ist, in der Längsrichtung des Nutzfahrzeugaufbaus 1 verschoben und in unterschiedlichen Stellungen in Längsrichtung des Nutzfahrzeugaufbaus 1 nach unten in eine Gebrauchsstellung (mit durchgezogenen Linien dargestellt) geschwenkt werden, in der die Trennwand 10 den Laderaum 8 in zwei separate Abschnitte 11,12 unterteilt, deren jeweilige Größe sich durch das Verstellen der Trennwand 10 in der Längsrichtung des Nutzfahrzeugaufbaus 1 variieren lässt. Zum Halten der Trennwand 10 in der Nichtgebrauchsstellung am Dach 3 und zum Verschieben der Trennwand 10 in der Nichtgebrauchsstellung in Längsrichtung des Laderaums 8 bzw. in Längsrichtung des Nutzfahrzeugs 1 ist ein umgeformtes Strangpressprofil 13 in Form eines Trennwandlaufprofils am Dach 3 vorgesehen, das sich in der Längsrichtung des Nutzfahrzeugs 1 erstreckt.

An der Stirnwand 2 ist bei dem dargestellten und insoweit bevorzugten Nutzfahrzeug N eine nicht dargestellte Transportkältemaschine zum Kühlen wenigstens eines Teils des Laderaums 8 vorgesehen. Die Transportkältemaschine kann Luft aus dem Laderaum 8 ansaugen, abkühlen und wieder zurück in den Laderaum 8 blasen. Bedarfsweise kann in einem hinteren Abschnitt des Laderaums 8 noch ein Deckenverdampfer am Dach vorgesehen sein, der über Kühlmittel mit der Transportkältemaschine verbunden sein kann. Sollte der Laderaum 8 durch die Trennwand 10 in einen vorderen und einen hinteren Abschnitt 11,12 unterteilt sein, so kann der hintere Abschnitt 12 des Laderaums 8 durch den Deckenverdampfer gekühlt werden, und zwar insbesondere auf ein anderes Temperaturniveau als der vordere Abschnitt 11 des Laderaums 8, der weiter durch die Transportkältemaschine gekühlt werden kann.

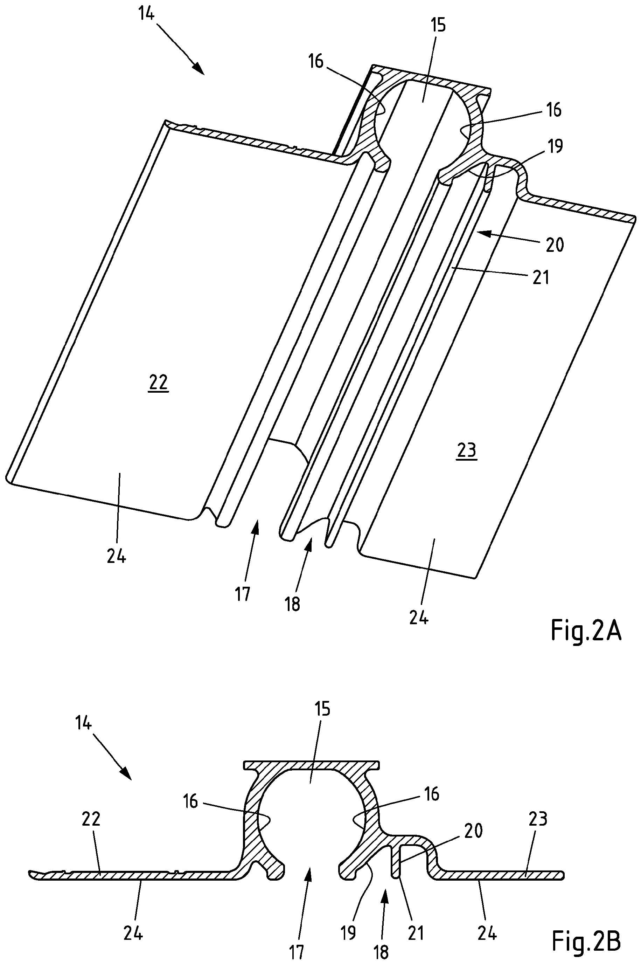

In den Fig. 2A-B ist ein Strangpressprofil 14 dargestellt, aus dem durch Umformen das Strangpressprofil 13 im Dach 3 des Nutzfahrzeugaufbaus 1 aus Fig. 1 gefertigt werden kann. Das Strangpressprofil 14 weist in einem mittleren Abschnitt eine Aufnahme 15 mit einem annähernd kreisförmigen Querschnitt auf. In die Aufnahme 15 kann ein Schlitten eingeführt werden, der über wenigstens eine Rolle an einer inneren Oberfläche 16 der Aufnahme 15 abrollen kann, um den Schlitten zusammen mit einem an dem Schlitten montierten Bauteil in Längsrichtung des Strangpressprofils 13 zu verschieben. Um den Schlitten mit einem Bauteil, wie etwa einer Trennwand 10 verbinden zu können, ist am unteren Ende ein Längsschlitz 17 in der Aufnahme 15 vorgesehen.

Rechts neben dieser Aufnahme 15 ist bei dem dargestellten und insoweit bevorzugten Strangpressprofil 14 eine Nut 18 vorgesehen. Die Nut 18 ist nach unten, mithin in dieselbe Richtung geöffnet wie die Aufnahme 15 bzw. der Längsschlitz 17 der Aufnahme 15. Dabei wird bei dem dargestellten und insoweit bevorzugten Strangpressprofil 14 die der Aufnahme 15 zugewandte Nutflanke 19 der Nut 18 durch die Außenseite der Aufnahme 15 des Strangpressprofils 14 gebildet. In der Nut 18 ist eine sich geradlinig und parallel zur Aufnahme ersteckende Rippenstruktur 20 vorgesehen, die bei dem dargestellten und insoweit bevorzugten Strangpressprofil 14 gänzlich in der Nut 18 aufgenommen ist. Der freie Rand 21 der Rippenstruktur 20 ragt mithin nicht nach unten aus der Nut 18 vor. An der von der Nut 18 abgewandten Seite der Aufnahme 15 und an der von der Aufnahme 15 abgewandten Seite der Nut 18 schließt sich an die Aufnahme 15 bzw. die Nut 18 jeweils ein äußerer Schenkel 22,23 an. Die seitlichen Schenkel 22,23 bilden die äußeren Abschlüsse des Strangpressprofils 14 und weisen an ihrer Unterseite, mithin der von der Aufnahme 15 und der Nut 18 abgewandten Seite, Außenseiten 24 auf, die in einer gemeinsamen Ebene angeordnet sind. Weder die Aufnahme 15 noch der Längsschlitz 17, die Nut 18 oder die Rippenstruktur 20 ragen gegenüber den Außenseiten 24 der Schenkel 22,23 vor.

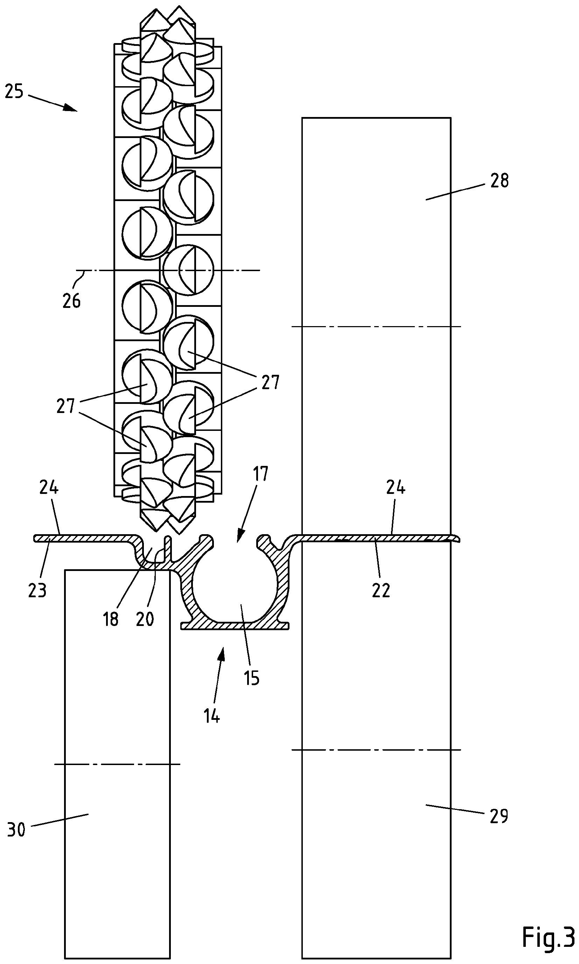

In der Fig. 3 ist schematisch ein Fertigungsschritt zum Umformen des Strangpressprofils 14 aus Fig. 2 mit einem Biege- und/oder Presswerkzeug 25 in einer Draufsicht dargestellt. Das Strangpressprofil 14 der Fig. 2 wird mit dem Biege- und/oder Presswerkzeug 25 der Fig. 3 bearbeitet. Das Biege- und/oder Presswerkzeug 25 kann dazu um eine Rotationsachse 26 drehen, während Biegenocken 27 in die Nut 18 des Strangpressprofils 14 eingreifen und das Strangpressprofil 14 durch das Biege- und/oder Presswerkzeug 25 hindurch geschoben und/oder gezogen wird. Dazu dienen insbesondere die beiden rechts dargestellten Walzen 28,29, zwischen denen das Strangpressprofil 14 reibschlüssig gehalten ist. Von den beiden Walzen 28,29 ist wenigstens eine in Transportrichtung des Strangpressprofils 14 motorisch angetrieben. Die links dargestellte Walze 30 dient vorwiegend als Gegenlager für die Bearbeitung des Strangpressprofils 14 durch das Biege- und/oder Presswerkzeug 25, kann aber auch zusammen mit dem Biege- und/oder Presswerkzeug 25 durch dessen Rotation für den Vortrieb des Strangpressprofils 14 sorgen.

In der Fig. 3 ist das Biege- und/oder Presswerkzeug 25 der besseren Übersichtlichkeit halber in einem nicht in die Nut 18 eingetauchten Zustand dargestellt. Das Biege- und/oder Presswerkzeug 25 muss diese Stellung tatsächlich aber nicht einnehmen können. Wenn die Biegenocken 27 in die Nut 18 des Strangpressprofils 14 eintauchen, gelangt die Rippenstruktur 20 zwischen die Biegenocken 27 und biegen die Biegenocken 27 bei rotierendem Biege- und/oder Presswerkzeug 25 die Rippenstruktur 20 wechselseitig auch außen, und zwar wenigstens im Wesentlichen senkrecht zur Längserstreckung des Strangpressprofils 14. Eine weitere Umformung des Strangpressprofils 14, die über das Umformen der Rippenstruktur 20 hinausgeht, ist bei der dargestellten Ausführungsform des Verfahrens nicht vorgesehen.

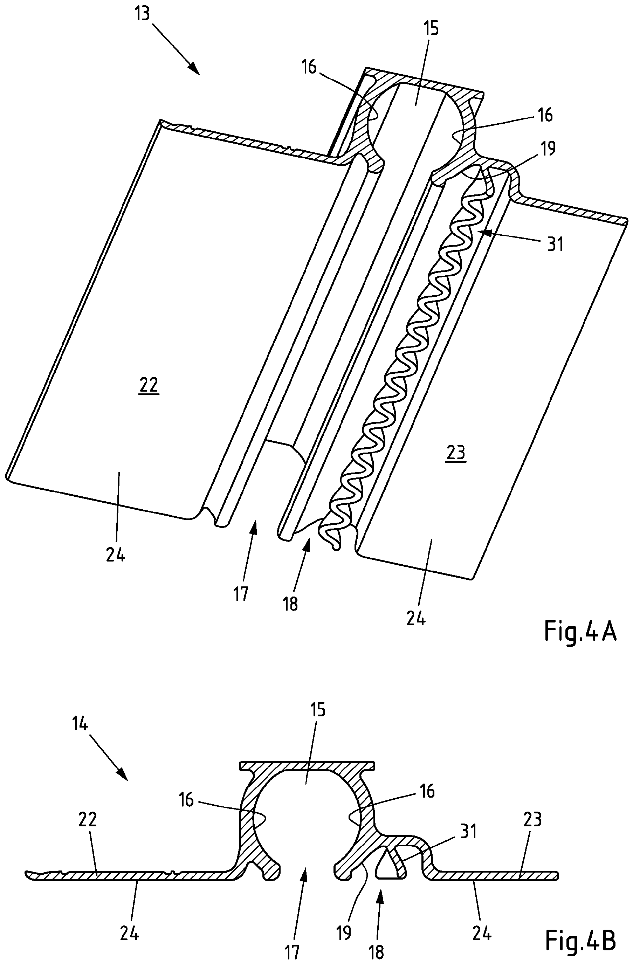

In den Fig. 4A-B ist das umgeformte Strangpressprofil 13 nach dem Umformen gemäß Fig. 3 dargestellt. Das Strangpressprofil 13 entspricht dabei dem Strangpressprofil 14 der Fig. 2A-B jedoch mit dem Unterschied, dass die Rippenstruktur 31 in der Längsrichtung des Strangpressprofils wellenförmig umgebogen ist.

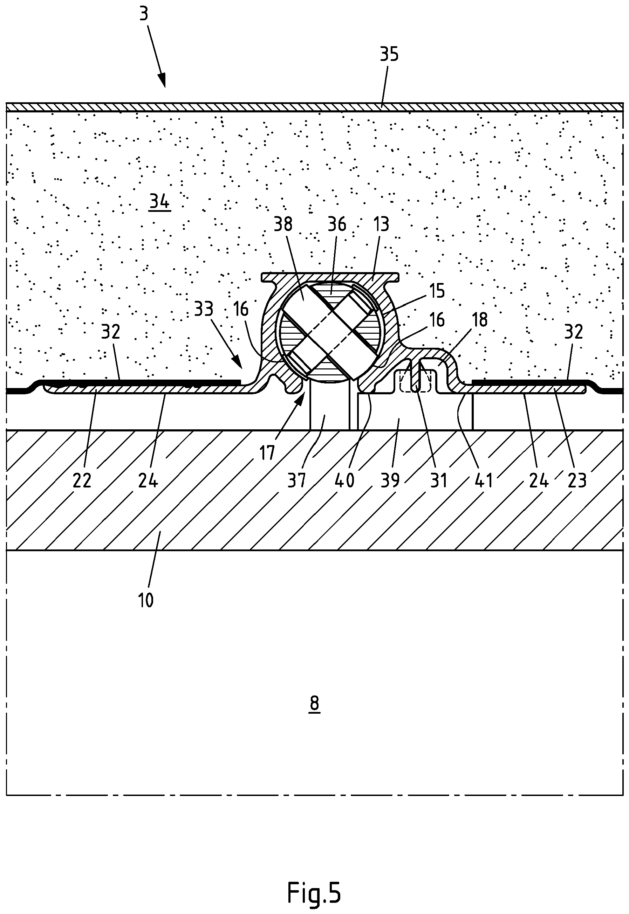

Das Strangpressprofil 13 kann, wie dies in der Fig. 5 dargestellt worden ist, als Trennwandlaufschiene in das Dach 3 des Nutzfahrzeugaufbaus 1 gemäß Fig. 1 eingelassen werden. Dabei können die Außenseiten der äußeren Schenkel 22,23 bündig mit der inneren Decklage 32 des Dachs 3 angeordnet werden. Die Aufnahme 15 ist durch einen Spalt 33 in der inneren Decklage 32 des Dachs 3 hindurchgesteckt, und ragt in den geschäumten Kunststoff der Kernlage 34 hinein, auf deren gegenüberliegender Seite die äußere Decklage 35 vorgesehen ist. In der Aufnahme 15 des umgeformten Strangpressprofils 13 befindet sich dann wenigstens ein Schlitten 36, an dem die Trennwand 10 über einen Steg 37 aufgehängt ist, der sich durch den Längsschlitz 17 der Aufnahme 15 hindurch erstreckt. Der Schlitten 36 weist zudem mehrere Rollen 38 auf, die an der Innenseite 16 der Aufnahme 15 abrollen, während der Schlitten 36 in der Längsrichtung des Strangpressprofils 13 bewegt wird.

Die Trennwand 10 befindet sich in der Fig. 5 in der Nichtgebrauchsstellung, in der die wellenförmig umgeformte Rippenstruktur 31 des Strangpressprofils 13 in Eingriff mit einem Rast- und/oder Arretierelement 39 ist. Das Rast- und/oder Arretierelement 39 wird dabei über einen nicht im Einzelnen dargestellten Mechanismus teilweise in die Nut 18 und von unten gegen die an die Nut 18 angrenzenden Abschnitte 40,41 des Strangpressprofils 13 gepresst. Durch dieses Anpressen wird ein Reibschluss zwischen dem Strangpressprofil 13 und dem Rast- und/oder Arretierelement 39 in der Längsrichtung des Strangpressprofils 13 geschaffen, der jedoch nicht zwingend ist. Zudem besteht in dieser Richtung durch das formschlüssige Umgreifen der wellenförmigen Rippenstruktur 31 vom Rast- und/oder Arretierelement 39 ein Formschluss. Es ergibt sich aber zudem noch eine Rastverbindung in einer Richtung senkrecht zum Strangpressprofil 13 und parallel zur wellenförmigen Rippenstruktur 31, vorliegend mithin nach unten. Die Rastverbindung wirkt einem versehentlichen Trennen von Rast- und/oder Arretierelement 39 einerseits und Strangpressprofil 13 andererseits entgegen.

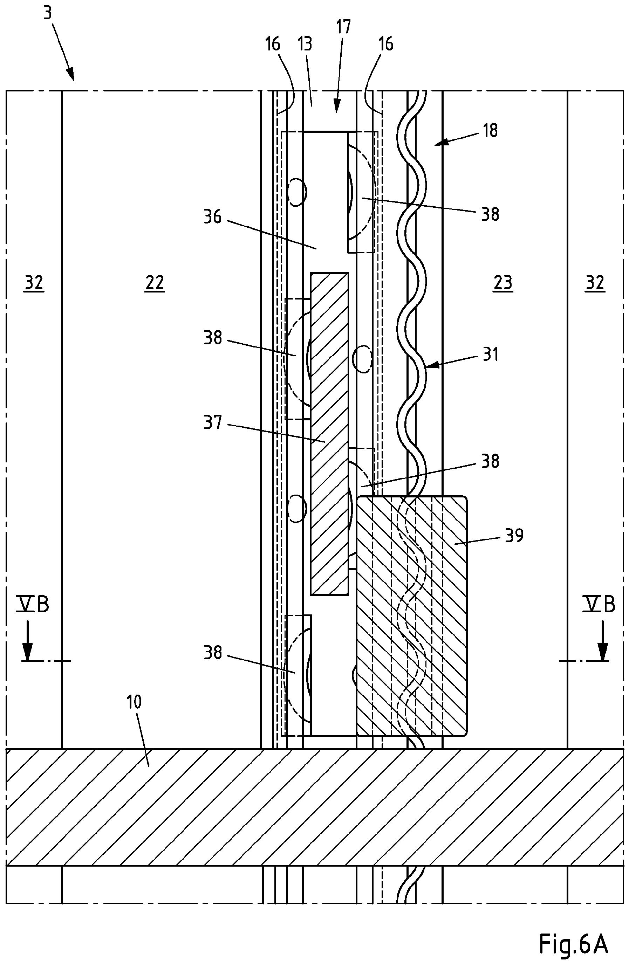

In den Fig. 6A-B ist die Trennwand 10 jeweils in Details in einer Gebrauchsstellung dargestellt, in der die Trennwand 10 zwei Abschnitte 11,12 des Laderaums 8 voneinander trennt. Auch in der dargestellten und insoweit bevorzugten Gebrauchsstellung der Trennwand 10 ist das Rast- und/oder Arretierelement 39 einerseits und die wellenförmig umgeformte Rippenstruktur 31 andererseits miteinander in Eingriff, wie dies bereits für die Nichtgebrauchsstellung der Trennwand 10 gemäß Fig. 5 beschrieben worden ist. Es wäre aber denkbar, dass das Rast- und/oder Arretierelement 39 und die wellenförmige Rippenstruktur 31 nur in der Gebrauchsstellung oder nur in der Nichtgebrauchsstellung der Trennwand 10 in einem gegenseitigen Eingriff sind, um dadurch ein versehentliches Verschieben der Trennwand 10 in der Längsrichtung des Strangpressprofils 13 zu vermeiden. Das Verstellen des Rast- und/oder Arretierelements 39 beim Verstellen der Trennwand 10 von der Gebrauchsstellung in die Nichtgebrauchsstellung und zurück, kann auf unterschiedliche Weisen, beispielsweise durch einen geeigneten Hebelmechanismus, bewerkstelligt werden.

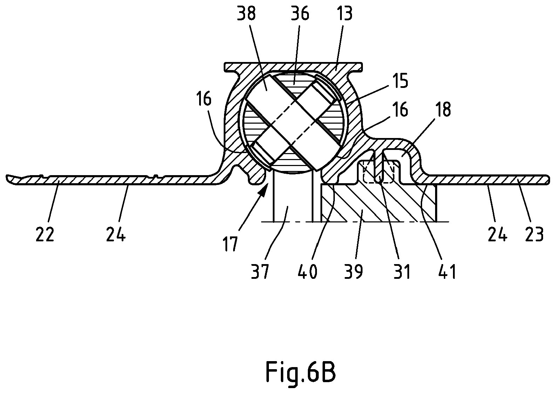

Der gegenseitige Eingriff von Rast- und/oder Arretierelement 39 und wellenförmiger Rippenstruktur 31 sind im Detail in der Fig. 6B dargestellt, wobei die Trennwand 10 in diesem Ausführungsbeispiel in Längsrichtung des Strangpressprofils 13 neben der Trennwand 10 vorgesehen ist aber nicht muss. Aus der entsprechenden Ansicht ist leicht ersichtlich, dass das formschlüssige Eingreifen von Rast- und/oder Arretierelements 39 und wellenförmiger Rippenstruktur 31 ein Verschieben des Rast- und/oder Arretierelement 39 in Längsrichtung des Strangpressprofils 13 verhindert. Das Rast- und/oder Arretierelement 39 ist wie auch die Trennwand 10 in nicht im Einzelnen dargestellter Weise über den Steg 37 mit dem Schlitten 36 verbunden. Ähnliche Verbindungen sind dem Fachmann bereits bekannt.

### Bezugszeichenliste

- 1: Nutzfahrzeugaufbau
- 2: Stirnwand
- 3: Dach
- 4,5: Seitenwände
- 6: Rückwand
- 7: Flügeltür
- 8: Laderaum
- 9: Ladeboden
- 10: Trennwand
- 11,12: Abschnitte
- 13,14: Strangpressprofil
- 15: Aufnahme
- 16: innere Oberfläche
- 17: Längsschlitz
- 18: Nut
- 19: Nutflanke
- 20: geradlinige Rippenstruktur
- 21: freier Rand
- 22,23: Schenkel
- 24: Außenseite
- 25: Biege- und/oder Presswerkzeug
- 26: Rotationsachse
- 27: Biegenocken
- 28-30: Walze
- 31: wellenförmige Rippenstruktur
- 32: innere Decklage
- 33: Spalt
- 34: Kernlage
- 35: äußere Decklage
- 36: Schlitten
- 37: Steg
- 38: Rolle
- 39: Rast- und/oder Arretierelement
- 40,41: Abschnitte Strangpressprofil

## Patentansprüche

1. Verfahren zum Herstellen eines umgeformten Strangpressprofils (13),
- bei dem ein metallischer Werkstoff auf eine Presstemperatur erwärmt und anschließend zur Bildung eines Strangpressprofils (14) durch eine Matrize gepresst wird,
- bei dem das Strangpressprofil (14) auf eine Temperatur von weniger als 50 °C abgekühlt wird,
- bei dem das Strangpressprofil (14) weniger als 7 Tage nach dem Abkühlen wenigstens abschnittsweise umgeformt wird in dem eine sich geradlinig in Längsrichtung des Strangpressprofils (14) erstreckende Rippenstruktur (20) wenigstens teilweise durch wechselseitiges Biegen zu einer sich wellenförmig in Längsrichtung des Strangpressprofils (14) erstreckenden Rippenstruktur (31) umgeformt wird.

2. Verfahren nach Anspruch 1,
- bei dem das Strangpressprofil (14) durch ein rotierendes, insbesondere in Längsrichtung des Strangpressprofils (14) relativ zum Strangpressprofil (14) entlang des Strangpressprofils (14) bewegtes, Biege- und/oder Presswerkzeug (39) umgebogen wird.

3. Verfahren nach Anspruch 1 oder 2,
- bei dem das Strangpressprofil (14) auf eine Temperatur von weniger als 40 °C, vorzugsweise von weniger als 30 °C, abgekühlt wird und /oder
- bei dem das Strangpressprofil (14) weniger als 5 Tage, vorzugsweise weniger als 3 Tage, insbesondere weniger als 1 Tag, nach dem Abkühlen wenigstens abschnittsweise umgeformt wird.

4. Verfahren nach einem der Ansprüche 1 bis 3,
- bei dem als der metallische Werkstoff Aluminium oder eine Aluminiumlegierung verwendet wird und/oder
- bei dem der metallische Werkstoff vor dem Strangpressen auf eine Temperatur oberhalb der Rekristallisationstemperatur des metallischen Werkstoffs erwärmt wird.

5. Verfahren nach einem der Ansprüche 1 bis 4,
bei dem das umgeformte Strangpressprofil (13) ein Profil eines Nutzfahrzeugaufbaus (1), vorzugsweise Kofferaufbaus, insbesondere ein Trennwandlaufprofil, ein Doppelstockprofil oder ein, bedarfsweise Öffnungen zum Einhaken von Ladungssicherungsmitteln aufweisendes, Ladungssicherungsprofil ist.

6. Nutzfahrzeugaufbau (1), insbesondere Kofferaufbau, vorzugsweise eines Lastkraftwagens, Anhängers oder Sattelaufliegers, mit einem umgeformten Strangpressprofil (13) hergestellt mittels des Verfahrens nach einem der Ansprüche 1 bis 5,
**dadurch gekennzeichnet, dass**
das Strangpressprofil (13) eine sich wellenförmig in Längsrichtung des Strangpressprofils (13) erstreckende Rippenstruktur (31) aufweist und, vorzugsweise, dass die Rippenstruktur (31) wenigstens im Wesentlichen in einer Erstreckung senkrecht zum Strangpressprofil (13) in einer sich, wenigstens im Wesentlichen in Längsrichtung des Strangpressprofils (13) erstreckenden, Nut (18) des Strangpressprofils (13) vorgesehen ist.

7. Nutzfahrzeugaufbau nach Anspruch 6,
**dadurch gekennzeichnet, dass**
das umgeformte Strangpressprofil (13) ein Trennwandlaufprofil, ein Doppelstockprofil, ein, bedarfsweise Öffnungen zum Einhaken von Ladungssicherungsmitteln aufweisendes, Ladungssicherungsprofil, eine Zahnstange, insbesondere eines elektrischen Rolltors, oder eine Arretierungseinrichtung für eine Fallsicherung eines mechanischen Rolltors ist.

8. Nutzfahrzeugaufbau nach Anspruch 6 oder 7,
**dadurch gekennzeichnet, dass**
das umgeformte Strangpressprofil (13) eine sich in Längsrichtung erstreckende, einen Längsschlitz (17) aufweisende und wenigstens eine sich in Längsrichtung erstreckende, innere Lauffläche (16) aufweisende Aufnahme (15) für einen längsverschiebbaren und über wenigstens eine Rolle (38) auf der wenigstens einen Lauffläche (16) abrollenden Schlitten (36) aufweist und, vorzugsweise, dass die Aufnahme (15) und die Rippenstruktur (31) wenigstens im Wesentlichen parallel zueinander verlaufen und/oder der Längsschlitz (17) und der freie Rand (21) der Rippenstruktur (31) wenigstens im Wesentlichen in dieselbe Richtung weisen.

9. Nutzfahrzeugaufbau nach Anspruch 8,
**dadurch gekennzeichnet, dass**
die Aufnahme (15) und die Rippenstruktur (31) in einem Abstand von höchstens 30 cm, vorzugsweise wenigstens 20 cm, insbesondere wenigstens 10 cm zueinander angeordnet sind und/oder dass die Aufnahme (15) einen wenigstens im Wesentlichen rechteckigen, ovalen oder runden Querschnitt aufweist und/oder dass die Aufnahme (15), insbesondere mit einer Außenseite, eine Nutflanke (19) der die Rippenstruktur (31) wenigstens im Wesentlichen aufnehmenden Nut (18) bildet.

10. Nutzfahrzeugaufbau nach Anspruch 8 oder 9,
**dadurch gekennzeichnet, dass**
die Rippenstruktur (31) in Richtung ihres freien Rands (21) nicht gegenüber der Aufnahme (15), insbesondere des Längsschlitzes (17) der Aufnahme (15) übersteht.

11. Nutzfahrzeugaufbau nach einem der Ansprüche 8 bis 10,
**dadurch gekennzeichnet, dass**
seitlich angrenzend an die Nut (18) und auf der von der Nut (18) abgewandten Seite der Aufnahme (15) seitlich angrenzend an die Aufnahme (15) jeweils ein äußerer Schenkel (22,23) des Strangpressprofils (13) vorgesehen ist und, vorzugsweise, dass die Schenkel (22,23) auf der von der Aufnahme (15) wegweisenden Seite wenigstens im Wesentlichen in einer gemeinsamen Ebene liegende Schenkelflächen und/oder Außenseiten aufweisen.

12. Nutzfahrzeugaufbau nach einem der Ansprüche 6 bis 11,
**dadurch gekennzeichnet, dass**
in die Rippenstruktur (31) des Strangpressprofils (13) wenigstens ein Rast- und/oder Arretierelement (39) formschlüssig eingreift und, vorzugsweise, dass das Rast- und/oder Arretierelement (39) in einer Richtung senkrecht zum Strangpressprofil (13), insbesondere wenigstens im Wesentlichen parallel zur Rippenstruktur (31), mit der Rippenstruktur (31) verrastet und/oder in einer Richtung wenigstens im Wesentlichen parallel zum Strangpressprofil (13) und wenigstens im Wesentlichen parallel zur Rippenstruktur (31), insbesondere ohne Verrasten, formschlüssig mit der Rippenstruktur (31) in Eingriff steht.

13. Nutzfahrzeugaufbau nach Anspruch 12,
**dadurch gekennzeichnet, dass**
das Rast- und/oder Arretierelement (39) ein Element einer Trennwand (10), eines Doppelstockbalkens oder eines Ladungssicherungsmittels ist.

## Claims

1. Method of manufacturing a formed extruded profile (13),
- in which a metallic material is heated to a pressing temperature and then pressed through a die to form an extruded profile (14),
- in which the extruded profile (14) is cooled to a temperature of less than 50 °C,
- in which the extruded profile (14) is formed less than 7 days after cooling, at least in sections, in which a rib structure (20) extending rectilinearly in the longitudinal direction of the extruded profile (14) is at least partially foremd by alternate bending to form a rib structure (31) extending undulatingly in the longitudinal direction of the extruded profile (14).

2. Method according to claim 1,
- in which the extruded profile (14) is bent by a bending and/or pressing tool (39) which rotates, in particular moves in the longitudinal direction of the extruded profile (14) relative to the extruded profile (14) along the extruded profile (14).

3. Method according to claim 1 or 2,
- in which the extruded profile (14) is cooled to a temperature of less than 40 °C, preferably less than 30 °C, and/or
- in which the extruded profile (14) is formed at least in sections less than 5 days, preferably less than 3 days, in particular less than 1, day after cooling.

4. Method according to any one of claims 1 to 3,
- in which the metallic material used is aluminum or an aluminum alloy and/or
- in which the metallic material is heated to a temperature above the recrystallization temperature of the metallic material before extrusion.

5. Method according to any one of claims 1 to 4,
in which the formed extruded profile (13) is a profile of a commercial vehicle body (1), preferably a box body, in particular a partition wall track profile, a duplex profile or a load-securing profile having, if required, openings for hooking in load-securing means.

6. Commercial vehicle body (1), in particular box body, preferably of a truck, trailer or semi-trailer, with a formed extruded profile (13) produced by means of the method according to any one of claims 1 to 5,
**characterized in that** the extruded profile (13) has a rib structure extending undulatingly in the longitudinal direction of the extruded profile (13) and, preferably, that the rib structure (31) is provided at least substantially in an extension perpendicular to the extruded profile (13) in a groove of the extruded profile (13) extending at least substantially in the longitudinal direction of the extruded profile (13).

7. Commercial vehicle body according to claim 6,
**characterized in that** the formed extruded profile (13) is a partition wall track profile, a duplex profile, a load-securing profile having, if required, openings for hooking in load-securing means, a toothed rack, in particular of an electric roller shutter door, or a locking device for a drop guard of a mechanical roller shutter door.

8. Commercial vehicle body according to claim 6 or 7,
**characterized in that** the formed extruded profile (13) has a receptacle (15) extending in the longitudinal direction and having a longitudinal slot (17) and at least one inner running surface (16) extending in the longitudinal direction for a longitudinally displaceable carriage (36) rolling on the at least one running surface (16) via at least one roller (38), and, preferably, that the receptacle (15) and the rib structure (31) extend at least substantially parallel to one another and/or the longitudinal slot (17) and the free edge (21) of the rib structure (31) point at least substantially in the same direction.

9. Commercial vehicle body according to claim 8,
**characterized in that** the receptacle (15) and the rib structure (31) are arranged at a distance of at most 30 cm, preferably at least 20 cm, in particular at least 10 cm, from one another and/or **in that** the receptacle (15) has an at least substantially rectangular, oval or round cross-section and/or **in that** the receptacle (15), in particular with an outer side, forms a groove flank (19) of the groove (18) at least substantially receiving the rib structure (31).

10. Commercial vehicle body according to claim 8 or 9,
**characterized in that** the rib structure (31) does not protrude in the direction of its free edge (21) with respect to the receptacle (15), in particular the longitudinal slot (17) of the receptacle (15).

11. Commercial vehicle body according to any one of claims 8 to 10,
**characterized in that** an outer leg (22, 23) of the extruded profile (13) is respectively provided laterally adjacent to the groove (18) and on the side of the receptacle (15) facing away from the groove (18) laterally adjacent to the receptacle (15) and, preferably, that the legs (22, 23) on the side facing away from the receptacle (15) have leg surfaces and/or outer sides lying at least substantially in a common plane.

12. Commercial vehicle body according to any one of claims 6 to 11,
**characterized in that** at least one latching and/or locking element (39) engages positively in the rib structure (31) of the extruded profile (13) and, preferably, that the latching and/or locking element (39) latches in a direction perpendicular to the extruded profile (13), in particular at least substantially parallel to the rib structure (31), with the rib structure (31) and/or positively engages with the rib structure (31) in a direction at least substantially parallel to the extruded profile (13) and at least substantially parallel to the rib structure (31), in particular without latching.

13. Commercial vehicle body according to claim 12,
**characterized in that** the latching and/or locking element (39) is an element of a partition wall (10), a duplex beam or a load-securing means.

## Revendications

1. Procédé de fabrication d'un profilé extrudé (13) façonné,
dans lequel un matériau métallique est chauffé à une température de pressage et est ensuite pressé par une matrice afin de former un profilé extrudé (14),
dans lequel le profilé extrudé (14) est refroidi à une température inférieure à 50 °C,
dans lequel le profilé extrudé (14) est façonné au moins partiellement, moins de 7 jours après le refroidissement, en façonné une structure nervurée (20) s'étendant en ligne droite dans le sens longitudinal du profilé extrudé (14), au moins partiellement par flexion alternée, en une structure nervurée (31) s'étendant en forme d'onde dans le sens longitudinal du profilé extrudé (14).

2. Procédé selon la revendication 1,
dans lequel le profilé extrudé (14) est plié à l'aide d'un outil de pliage et/ou
d'un outil de moulage par compression (39) rotatif, notamment mobile le long du profilé extrudé (14) dans le sens longitudinal du profilé extrudé (14) par rapport au profilé extrudé (14).

3. Procédé selon la revendication 1 ou 2,
dans lequel le profilé extrudé (14) est refroidi à une température inférieure à 40 °C, de préférence inférieure à 30 °C, et/ou dans lequel le profilé extrudé (14) est façonné, au moins partiellement, moins de 5 jours, de préférence moins de 3 jours, notamment moins de 1 jour, après le refroidissement.

4. Procédé selon l'une des revendications 1 à 3,
dans lequel le matériau métallique est de l'aluminium ou un alliage d'aluminium et/ou
dans lequel le matériau métallique est chauffé à une température supérieure à la température de recristallisation du matériau métallique avant l'extrusion.

5. Procédé selon l'une des revendications 1 à 4,
dans lequel le profilé extrudé (13) façonné est un profilé d'une structure de véhicule utilitaire (1), de préférence d'une structure de coffre, notamment d'un profilé de coulissage de cloison, d'un profilé à double étage ou d'un profilé d'arrimage de charge présentant, le cas échéant, des ouvertures pour l'accrochage de moyens d'arrimage du charge.

6. Structure de véhicule utilitaire (1), notamment une structure de coffre, de préférence d'un camion, d'une remorque ou d'une semi-remorque, fabriquée avec un profilé extrudé (13) façonné en utilisant le procédé selon l'une des revendications 1 à 5,
**caractérisée en ce que** le profilé extrudé (13) présente une structure nervurée (31) s'étendant en forme d'onde dans le sens longitudinal du profilé extrudé (13) et, de préférence, **en ce que** l'on prévoit la structure nervurée (31) au moins essentiellement dans une extension perpendiculaire au profilé extrudé (13) dans une rainure (18) du profilé extrudé (13) s'étendant au moins essentiellement dans le sens longitudinal du profilé extrudé (13).

7. Structure de véhicule utilitaire selon la revendication 6,
**caractérisée en ce que** le profilé extrudé (13) façonné est un profilé de coulissage de cloison, un profilé à double étages, un profilé d'arrimage de charge présentant, le cas échéant, des ouvertures pour l'accrochage de moyens d'arrimage du charge, une crémaillère, notamment d'un volet roulant électrique, ou un dispositif de verrouillage pour un dispositif de sécurité antichute d'un volet roulant mécanique.

8. Structure de véhicule utilitaire selon la revendication 6 ou 7,
**caractérisée en ce que** le profilé extrudé (13) façonné présente un logement (15) s'étendant dans le sens longitudinal, présentant une fente longitudinale (17) et au moins une surface de roulement intérieure (16), s'étendant dans le sens longitudinal, pour un chariot (36) coulissant longitudinalement et roulant sur ladite au moins une surface de roulement (16) par l'intermédiaire d'au moins un galet (38) et, de préférence, **en ce que** le logement (15) et la structure nervurée (31) s'étendent au moins sensiblement parallèlement l'un à l'autre et/ou la fente longitudinale (17) et le bord libre (21) de la structure nervurée (31) sont orientés au moins sensiblement dans la même direction.

9. Structure de véhicule utilitaire selon la revendication 8,
**caractérisée en ce que** le logement (15) et la structure nervurée (31) sont agencés à une distance maximale de 30 cm, de préférence d'au moins 20 cm, notamment d'au moins 10 cm, l'un de l'autre et/ou **en ce que** le logement (15) présente une section au moins essentiellement rectangulaire, ovale ou ronde et/ou **en ce que** le logement (15) forme, notamment avec un côté extérieur, un flanc de rainure (19) de la rainure (18) logeant, au moins essentiellement, la structure nervurée (31).

10. Structure de véhicule utilitaire selon la revendication 8 ou 9,
**caractérisée en ce que**
la structure nervurée (31) ne dépasse pas, en direction de son bord libre (21), par rapport au logement (15), notamment par rapport à la fente longitudinale (17) du logement (15).

11. Structure de véhicule utilitaire selon l'une des revendications 8 à 10,
**caractérisée en ce que** l'on prévoit respectivement une branche extérieure (22, 23) du profilé extrudé (13) sur le côté adjacent à la rainure (18) et sur le côté opposé à la rainure (18) du logement (15) adjacent latéralement au logement (15) et, de préférence, **en ce que** les branches (22, 23) présentent, sur le côté opposé au logement (15), au moins essentiellement des surfaces de branche et/ou des côtés extérieurs situés dans un plan commun.

12. Structure de véhicule utilitaire selon l'une des revendications 6 à 11,
**caractérisée en ce qu'**au moins un élément d'encliquetage et/ou de verrouillage (39) s'engage, par complémentarité de forme, dans la structure nervurée (31) du profilé extrudé (13) et, de préférence, **en ce que** l'élément d'encliquetage et/ou de verrouillage (39) s' enclenche, dans une direction perpendiculaire au profilé extrudé (13), notamment au moins essentiellement parallèle à la structure nervurée (31), dans la structure nervurée (31) et/ou entre en prise, par complémentarité de forme, sans encliquetage, avec la structure nervurée (31) dans une direction au moins essentiellement parallèle au profilé extrudé (13), et est au moins essentiellement parallèle à la structure nervurée (31).

13. Structure de véhicule utilitaire selon la revendication 12,
**caractérisée en ce que**
l'élément d'encliquetage et/ou de verrouillage (39) est un élément d'une cloison (10), d'une barre double étage ou d'un moyen d'arrimage du charge.
